# EUROPÄISCHE PATENTSCHRIFT

(11) **EP 3 256 795 B1**
(45) Veröffentlichungstag und Bekanntmachung des Hinweises auf die Patenterteilung: **18.09.2019**
(21) Anmeldenummer: 16703780.3
(22) Anmeldetag: 10.02.2016
(51) Int. Cl.: F24S 25/636, F24S 25/67

(54) **KLEMMVORRICHTUNG UND VERFAHREN ZUR MONTAGE EINES SOLARMODULS**
CLAMPING DEVICE AND METHOD FOR MOUNTING A SOLAR MODULE
DISPOSITIF DE SERRAGE ET PROCÉDÉ POUR LE MONTAGE D'UN MODULE SOLAIRE

(30) Priorität: 12.02.2015 DE 102015202596
(43) Veröffentlichungstag der Anmeldung: 20.12.2017
(73) Patentinhaber: Solibro Hi-Tech GmbH, 06766 Bitterfeld-Wolfen (DE)
(72) Erfinder: ZABEL, Christian, 06429 Nienburg (DE)
(74) Vertreter: Ramrath, Lukas
(86) Internationale Anmeldenummer: PCT/EP2016/052771
(87) Internationale Veröffentlichungsnummer: WO 2016/128429

(56) Entgegenhaltungen:
- EP-A1- 2 592 197
- WO-A1-2012/012998
- WO-A1-2015/100048
- DE-U1- 20 110 459
- DE-U1-202010 006 442
- US-A- 5 076 035
- US-A1- 2014 318 604

## Beschreibung

Die Erfindung betrifft eine Klemmvorrichtung für ein Solarmodul sowie ein Verfahren zur Montage eines Solarmoduls.

Insbesondere bei rahmenlosen Glas-Glas-Solarmodulen ist eine Ableitung von Zug- und Druckkräften, die auf das Solarmodul wirken, in eine Tragstruktur vorzugsweise nur in bestimmten Abschnitten eines Randbereichs des Solarmoduls zu gewährleisten, um einen Bruch des Solarmoduls zu verhindern.

Die DE 20 2009 015 056 U1 offenbart eine Klemmvorrichtung zur Befestigung von plattenförmigen Elementen auf einem Träger, wobei die Klemmvorrichtung einen im Wesentlichen starren Grundkörper mit ein- oder beidseitigen Klemmflügeln und einen elastischen Körper, der ein- oder beidseitig Aufnahmebereiche mit einer oberen Flanke, einer unteren Flanke und einer rückwärtigen Seite für die plattenförmigen Elemente bereitstellt, aufweist. Hierbei bildet der elastische Körper eine den im Wesentlichen starren Grundkörper aufnehmende Basis.

Die DE 20 2009 014 048 U1 offenbart ebenfalls eine Klemmvorrichtung für plattenförmige Elemente mit einem Grundkörper mit ein- oder beidseitigen Klemmflügeln und zentralen Stützelementen und mit einem oder zwei im Wesentlichen U-förmigen, nach außen offenen elastischen Profilen. Das elastische Profil liegt mit einer seitlichen Flanke unterhalb der Klemmflügel an und mit der rückwärtigen Seite teilweise an den zentralen Stützelementen. Weiter sind wenigstens ein, vorzugsweise zwei, im Wesentlichen U-förmige starre Profile an dem Grundkörper angeordnet und zur Bildung eines Widerlagers für die rückwärtige Seite des elastischen Profils vorgesehen.

Weder die DE 20 2009 014 048 U1 noch die DE 20 2009 015 056 U1 offenbaren eine als ein Teil ausgebildete Klemmvorrichtung, deren Aufnahmebereich von einem biegesteif ausgebildeten Profil gebildet wird.

Die EP 2 592 197 A1 offenbart ein Befestigungsmittel zum Befestigen eines plattenartigen Moduls an einem Dach.

Die US 2014/318604 A1 offenbart das Befestigen und Erden eines Photovoltaikmoduls an Befestigungsschienen oder einem Gestellsystem.

Die WO 2012/012998 A1 offenbart eine Solarmontageklammer.

Die WO 2015/100048 A1 offenbart eine Klammer für Solarsysteme.

Es stellt sich das technische Problem, eine Klemmvorrichtung für ein Solarmodul sowie ein Verfahren zur Montage eines Solarmoduls zu schaffen, welche eine zuverlässige Befestigung des Solarmoduls an verschieden ausgebildeten Tragstrukturen ermöglichen, eine gewünschte Kraftableitung in jede dieser verschieden ausgebildeten Tragstrukturen gewährleisten, Produktionskosten für die Klemmvorrichtung verringern sowie die Montage eines Solarmoduls an einer Tragstruktur vereinfachen. Die Kraftableitung kann insbesondere gleichmäßig über eine gesamte Befestigungsfläche der Tragstruktur erfolgen, wenn die Klemmvorrichtung im befestigten Zustand an der Befestigungsfläche anliegt. Ein weiteres Teilproblem kann die Schaffung einer Klemmvorrichtung für ein Solarmodul sowie ein Verfahren zur Montage eines Solarmoduls sein, die die Einstellung verschiedener oder eines vorbestimmten Mindestabstands zwischen einer Unterseite des Solarmoduls und der Tragstruktur ermöglichen.

Es ist eine Grundidee der Erfindung, eine Klemmvorrichtung zu schaffen und in einem Verfahren zur Montage eines Solarmoduls zu verwenden, die einteilig ausgebildet ist, deren Aufnahmebereich von biegesteif bzw. unelastisch ausgebildeten Seitenwandabschnitten eingefasst wird und die bei unterschiedlichen Auflagezuständen an einer Tragstruktur eine gleichmäßige und vollflächige Kraftableitung von dem Solarmodul über die Klemmvorrichtung in die Tragstruktur gewährleistet. Weiter kann ein definierter Abstand zur Tragstruktur bzw. Unterkonstruktion sichergestellt werden.

Vorgeschlagen wird eine Klemmvorrichtung für ein Solarmodul. Das Solarmodul kann insbesondere ein sogenanntes Glas-Glas-Solarmodul sein, wobei sowohl eine Oberseite des Solarmoduls als auch eine Unterseite des Solarmoduls von einem Glaskörper ausgebildet wird. Selbstverständlich ist die Klemmvorrichtung aber auch zur Klemmung anderer Körper, insbesondere plattenförmiger Körper, geeignet.

Im Folgenden wird Bezug auf ein Referenzkoordinatensystem der Klemmvorrichtung genommen, welches eine Längsachse, eine Querachse und eine Vertikalachse aufweist. Die Vertikalachse ist parallel zu einer Oberflächennormalen einer Ober- oder Unterseite eines Solarmoduls orientiert, welches in einem Aufnahmeabschnitt der Klemmvorrichtung aufgenommen ist. Die Längsachse der Klemmvorrichtung kann parallel zu der Erstreckungsrichtung des Randes des Solarmoduls sein, dessen Abschnitt im Aufnahmeabschnitt angeordnet ist. Die Querachse kann orthogonal zu der Längsachse und Vertikalachse orientiert sein. Insbesondere kann die Querachse auch orthogonal zu einer Seitenrandfläche des Randabschnitts orientiert sein. Richtungsbezogene Begriffe wie z.B. "oben", "unten", "oberhalb", "unterhalb" können sich auf die Referenzkoordinatensystem, beispielsweise die Vertikalachse, beziehen.

Die vorgeschlagene Klemmvorrichtung dient insbesondere zur Aufnahme, Klemmung und Befestigung eines Randabschnitts einer Längs- oder Stirnseite des Solarmoduls an einer Tragstruktur. Die Länge des aufgenommenen Randabschnitts ist vorzugsweise kleiner als die Gesamtlänge der Längs- bzw. Querseite.

Die Klemmvorrichtung weist mindestens einen ersten Aufnahmeabschnitt zur Aufnahme des Randabschnitts des Solarmoduls auf oder bildet diesen aus. Es ist möglich, dass die Klemmvorrichtung genau einen Aufnahmeabschnitt aufweist oder ausbildet. Allerdings ist es auch möglich, dass die Klemmvorrichtung genau zwei Aufnahmeabschnitte aufweist oder ausbildet, wobei der erste Aufnahmeabschnitt zur Aufnahme eines Randabschnittes eines ersten Solarmoduls und der weitere Aufnahmeabschnitt zur Aufnahme eines Randabschnitts eines weiteren Solarmoduls vorgesehen ist.

Der erste Aufnahmeabschnitt weist zumindest einen ersten Seitenwandabschnitt und einen weiteren Seitenwandabschnitt zur Ausbildung eines Aufnahmebereichs auf. Weiter kann der erste Aufnahmeabschnitt auch einen Bodenwandabschnitt aufweisen. Der erste und der weitere Aufnahmeabschnitt sowie gegebenenfalls der Bodenwandabschnitt können einen Aufnahmebereich bzw. ein Aufnahmevolumen um- oder einfassen. Ist ein Solarmodul in diesem Aufnahmebereich angeordnet, so können der erste Aufnahmeabschnitt an einer Oberseite des Solarmoduls und der weitere Seitenwandabschnitt an einer Unterseite des Solarmoduls angeordnet sein. Der Bodenwandabschnitt kann an einer Randseite des Solarmoduls angeordnet sein.

Der erste Seitenwandabschnitt kann auch als oberer Seitenwandabschnitt bezeichnet werden. Entsprechend kann der weitere Seitenwandabschnitt auch als unterer Seitenwandabschnitt bezeichnet werden. Die Vertikalrichtung ist von unten nach oben orientiert, wenn sie von der Unterseite des Solarmoduls zur Oberseite hin orientiert ist.

Der Aufnahmebereich kann zur Einführung des Solarmoduls zu zumindest einer Seite hin offen sein. Vorzugsweise ist der Aufnahmebereich zu mindestens drei Seiten hin geöffnet. Die Seitenwandabschnitte können insbesondere balken- oder plattenförmig ausgebildet sein. In einer Querschnittsebene, die senkrecht zur Längsachse der Klemmvorrichtung orientiert ist, können die Seitenwandabschnitte einen rechteckigen Querschnitt aufweisen. Die Seitenwandabschnitte können eine Höhe bzw. eine Dicke von 1 mm bis 12 mm aufweisen. Die Höhe kann beispielsweise entlang der Vertikalachse gemessen werden. Weiter können die Seitenwandabschnitte eine Breite von 5 mm bis 20 mm aufweisen. Die Breite kann beispielsweise entlang der Querachse gemessen werden. Weiter können die Seitenwandabschnitte eine Länge von 50 mm bis 200 mm aufweisen. Die Länge kann beispielsweise entlang der Längsachse gemessen werden. Die Seitenwandabschnitte können jeweils ein freies Ende und ein eingespanntes, also fest gelagertes, Ende aufweisen. Das fest eingespannte Ende kann jeweils fest mit dem Bodenwandabschnitt verbunden sein.

Auch die Klemmvorrichtung oder der Aufnahmebereich kann eine vorbestimmte Länge entlang der Längsachse aufweisen, wobei diese Länge der Länge der Seitenwandabschnitte entsprechen kann. Die Länge kann beispielsweise 120 mm betragen. Die Länge kann hierbei vorzugsweise derart gewählt werden, dass eine vorbestimmte Biegesteifigkeit um eine Biegeachse, die parallel zur Querachse orientiert ist, gewährleistet wird.

Der erste Aufnahmeabschnitt ist einteilig ausgebildet. Dies kann bedeuten, dass der erste Aufnahmeabschnitt einstückig ausgebildet ist. Einteilig kann auch bedeuten, dass die Bestandteile des ersten Aufnahmeabschnitts, insbesondere der erste und der weitere Seitenwandabschnitt, nicht zerstörungsfrei voneinander trennbar sind. Vorzugsweise werden die Bestandteile des Aufnahmeabschnitts, insbesondere der erste Seitenwandabschnitt und der weitere Seitenwandabschnitt sowie gegebenenfalls der Bodenwandabschnitt, von einem Profilelement, insbesondere einem Strangpress-Profilelement, ausgebildet.

Weiter ist der Elastizitätsmodul des ersten Aufnahmeabschnitts, insbesondere des weiteren Seitenwandabschnitts, größer als der Elastizitätsmodul von Gummi. Der Elastizitätsmodul von Gummi kann in einem Bereich von 0.01 x 10^9 N/m² bis 0.1 x 10^9 N/m² liegen, wobei der Elastizitätsmodul des ersten Aufnahmeabschnitts größer als 0.1 x 10^9 N/m² ist. Vorzugsweise kann der Elastizitätsmodul des ersten Aufnahmeabschnitts größer als oder gleich dem Elastizitätsmodul von Polyamid, insbesondere Polyamid 66, sein Weiter vorzugsweise kann der Elastizitätsmodul des ersten Aufnahmeabschnitts größer als oder gleich 1 x 10^9 N/m², besonders bevorzugt größer als oder gleich 10 x 10^9 N/m² oder 50 x 10^9 N/m² sein.

Dies bedeutet, dass der erste Aufnahmeabschnitt und somit insbesondere der erste und der weitere Seitenwandabschnitt aus einem Material ausgebildet sind, welches den erläuterten Elastizitätsmodul aufweist. Weiter kann die gesamte Klemmvorrichtung den Elastizitätsmodul des ersten Aufnahmeabschnitts aufweisen.

Mit anderen Worten sind der erste Seitenwandabschnitt und der weitere Seitenwandabschnitt unelastischer als Gummi oder ein vergleichbar elastischer Werkstoff ausgebildet. Weiter bedeutet dies, dass eine Biegesteifigkeit des erfindungsgemäßen Seitenwandabschnitts größer als eine Biegesteifigkeit eines entsprechenden Seitenwandabschnitts aus Gummi oder einem vergleichbar elastischen Werkstoff ist. Hierbei kann der entsprechende Seitenwandabschnitt die gleichen geometrischen Dimensionen wie der erfindungsgemäße weitere Seitenwandabschnitt aufweisen. Die Biegesteifigkeit kann insbesondere um eine Biegeachse gegeben sein, die parallel zur Längsachse orientiert ist. Die Biegeachse kann hierbei insbesondere entlang einer Schnittstelle zwischen dem entsprechenden Seitenwandabschnitt und dem Bodenwandabschnitt verlaufen.

Somit ergibt sich ein unelastisch und biegesteif ausgebildeter Aufnahmeabschnitt.

In der Querschnittsebene senkrecht zur Längsachse kann der erste Aufnahmeabschnitt einen im Wesentlichen U-förmigen Querschnitt aufweisen. Der Begriff U-förmig schließt hierbei mit ein, dass die Seitenwandabschnitte parallel oder, wie nachfolgend noch näher erläutert, geneigt zueinander angeordnet sind.

Umfasst die Klemmvorrichtung einen weiteren Aufnahmeabschnitt, so kann dieser weitere Aufnahmeabschnitt entsprechend dem ersten Aufnahmeabschnitt ausgebildet sein. Insbesondere kann auch der weitere Aufnahmeabschnitt einen ersten (oberen) Seitenwandabschnitt und einen weiteren (unteren) Seitenwandabschnitt zur Ausbildung eines Aufnahmebereichs aufweisen, wobei auch der weitere Aufnahmeabschnitt einteilig ausgebildet sein kann und wobei der Elastizitätsmodul des weiteren Aufnahmeabschnitts größer als der Elastizitätsmodul von Gummi ist. Der weitere Aufnahmeabschnitt kann somit auch mit den Merkmalen oder gemäß den Aspekten weitergebildet sein, die bezüglich des ersten Aufnahmeabschnitts in dieser Erfindung beschriebenen sind. Vorzugsweise sind in diesem Fall der erste und der weitere Aufnahmeabschnitt einteilig ausgebildet. Dies kann bedeuten, dass alle Seitenwandabschnitte und gegebenenfalls Bodenwandabschnitte der Aufnahmeabschnitte von einem Profilelement ausgebildet werden. Vorzugsweise ist die Klemmvorrichtung als einteiliges Klemmprofilelement, insbesondere Strangpress-Profilelement, ausgebildet.

Die einteilige Ausbildung ermöglicht in vorteilhafter Weise eine vereinfachte und preisgünstige Herstellung der Klemmvorrichtung. Da zur Aufnahme und Klemmung des Solarmoduls nicht zwei separate Bauteile miteinander verbunden werden müssen, vereinfacht sich somit auch die Montage von Solarmodulen. Weiter ermöglicht die vorgeschlagene Vorrichtung, dass eine gewünschte Kraftableitung von Zug- und Druckkräften, die auf das Solarmodul wirken, in eine entsprechende Tragstruktur gewährleistet wird.

In einer weiteren Ausführungsform ist zumindest der weitere Seitenwandabschnitt um eine Biegeachse verbiegbar, wobei die Biegeachse parallel zur Längsachse der Klemmvorrichtung orientiert ist. Vorzugsweise verläuft die Biegeachse entlang des Kontaktabschnitts zwischen dem Bodenwandabschnitt und dem weiteren Seitenwandabschnitt. Selbstverständlich kann auch der erste Seitenwandabschnitt um eine Biegeachse verbiegbar sein, wobei die Biegeachse parallel zur Längsachse orientiert ist und vorzugsweise entlang des Kontaktabschnitts zwischen dem ersten Seitenwandabschnitt und dem Bodenwandabschnitt verläuft.

Durch die Verbiegbarkeit wird in vorteilhafter Weise die Klemmung und somit sichere mechanische Befestigung eines Solarmoduls im Aufnahmeabschnitt ermöglicht. Insbesondere kann ein Randabschnitt des Solarmoduls in einem unverbogenen Zustand des ersten und/oder weiteren Seitenwandabschnitts im Aufnahmebereich angeordnet werden, wobei dann zur Klemmung des Solarmoduls der erste und/oder der weitere Seitenwandabschnitt verbogen werden.

In einer weiteren Ausführungsform ist in einem nicht verformten, insbesondere nicht verbogenen, Zustand des weiteren Seitenwandabschnitts der weitere Seitenwandabschnitt mit einem Winkel größer als 0° und kleiner als 90° gegenüber dem ersten Seitenwandabschnitt geneigt. Der Winkel kann insbesondere in einem Bereich von 3° bis 12° liegen. Beispielsweise kann der Winkel 7,5° betragen.

Der Winkel kann hierbei ein Winkel zwischen ebenen Oberflächen der Seitenwandabschnitte sein. Auch kann der Winkel einen Winkel zwischen zentralen Achsen der Seitenwandabschnitte bezeichnen. Somit sind also die Seitenwandabschnitte des ersten Aufnahmeabschnittes im nicht verformten Zustand nicht parallel zueinander angeordnet. In der Querschnittsebene senkrecht zur Längsachse kann der erste Aufnahmeabschnitt somit einen U-förmigen Querschnitt aufweisen, bei dem ein Seitenschenkel des U-förmigen Querschnitts ausgeknickt oder schräg gestellt angeordnet ist. Es ist insbesondere möglich, dass ein Winkel zwischen dem ersten Seitenwandabschnitt und dem Bodenwandabschnitt ein rechter Winkel ist, während ein Winkel zwischen dem Bodenwandabschnitt und dem weiteren Seitenwandabschnitt ein stumpfer Winkel ist.

Dies ermöglicht in vorteilhafter Weise eine einfache Aufnahme eines zu klemmenden Solarmoduls in den Aufnahmebereich. Zur Befestigung, insbesondere Klemmung, des Solarmoduls kann dann der weitere Seitenwandabschnitt derart verbogen werden, dass das Solarmodul zwischen den ersten und weiteren Seitenwandabschnitt eingeklemmt wird. Somit wird ein Verfahren zur Montage des Solarmoduls in vorteilhafter Weise vereinfacht.

In einer weiteren Ausführungsform ist in einem nicht verformten Zustand des weiteren Seitenwandabschnitts ein maximaler Abstand zwischen dem ersten und dem weiteren Seitenwandabschnitt größer als eine Dicke eines zu klemmenden Solarmoduls. Eine Dicke eines zu klemmenden Solarmoduls kann beispielsweise 6.3 mm oder 7.3 mm betragen. Selbstverständlich sind jedoch auch andere Werte der Dicke vorstellbar. Der Abstand kann hierbei entlang der Vertikalachse gemessen werden. Auch kann ein minimaler Abstand zwischen dem weiteren Seitenwandabschnitt und dem ersten Seitenwandabschnitt größer als die Dicke des zu klemmenden Solarmoduls sein.

Es ist auch möglich, dass der Abstand zwischen dem ersten und dem weiteren Seitenwandabschnitt im nicht verformten Zustand entlang der vorhergehend erläuterten Querachse zunimmt, insbesondere von einem innenliegenden, eingespannten Ende hin zu einem freien Ende des weiteren Seitenwandabschnitts. Hierdurch wird in vorteilhafter Weise eine besonders einfache Montage des Solarmoduls an einer Tragstruktur ermöglicht, da das Solarmodul problemlos in dem Aufnahmebereich angeordnet werden kann, bevor es durch z.B. Verbiegung des weiteren Seitenwandabschnitts geklemmt wird. In einer bevorzugten Ausführungsform ist zumindest der Aufnahmeabschnitt, insbesondere der erste Aufnahmeabschnitt, der Klemmvorrichtung aus Metall ausgebildet. Vorzugsweise ist der Aufnahmeabschnitt aus Aluminium ausgebildet. Allerdings ist es auch vorstellbar, dass der Aufnahmeabschnitt aus Kunststoff, Verbundwerkstoff oder einer Metalllegierung ausgebildet ist. Die Ausbildung aus Metall ermöglicht in vorteilhafter Weise eine vereinfachte Herstellung der Klemmvorrichtung, beispielsweise durch ein Strangpress-Verfahren. Auch können somit Herstellungskosten der Klemmvorrichtung reduziert werden.

In einer weiteren Ausführungsform weist die Klemmvorrichtung einen Befestigungsabschnitt zur Befestigung an einer Tragstruktur auf oder bildet diesen aus. Die Tragstruktur kann hierbei insbesondere eine ebene Befestigungsfläche aufweisen. Weiter weist der Befestigungsabschnitt einen Kontaktabschnitt zur Auflage auf der Tragstruktur, insbesondere der Befestigungsfläche der Tragstruktur, auf. Der Kontaktabschnitt kann als Kontaktfläche, vorzugsweise als ebene Kontaktfläche, ausgebildet sein oder eine solche aufweisen.

Der Befestigungsabschnitt und der erste Aufnahmeabschnitt sowie gegebenenfalls weitere Aufnahmeabschnitte können einteilig ausgebildet sein. Insbesondere können diese von einem Profilelement ausgebildet werden.

Der Befestigungsabschnitt kann mindestens ein Befestigungselement aufweisen oder ausbilden. Beispielsweise kann der Befestigungsabschnitt eine Durchgangsöffnung zur Aufnahme einer Schraube aufweisen. Die Schraube kann beispielsweise eine selbstschneidende Schraube, eine Hammerkopfschraube, eine selbstfurchende Schraube oder eine Verdrängerschraube sein. Selbstverständlich kann der Befestigungsabschnitt auch alternative oder weitere Befestigungsmittel oder -elemente aufweisen oder ausbilden, beispielsweise Klemmelemente, Rastelemente. Der Befestigungsabschnitt kann beispielsweise ein plattenförmiges Element aufweisen, wobei das plattenförmige Element die vorhergehend erläuterte Durchgangsöffnung aufweisen kann.

Erfindungsgemäß ist der Kontaktabschnitt des Befestigungsabschnitts entlang der Vertikalachse mit einem vorbestimmten Abstand von einem innenliegenden Endabschnitt des weiteren Seitenwandabschnitts angeordnet. Hierbei ist ein Verbindungsabschnitt zwischen dem innenliegenden Endabschnitt und dem Kontaktabschnitt des Befestigungsabschnitts angeordnet. Der innenliegende Endabschnitt bezeichnet hierbei ein dem freien Endabschnitt des weiteren Seitenwandabschnitts gegenüberliegenden Endabschnitt. Der innenliegende Endabschnitt kann insbesondere eingespannt, also fest gelagert, sein. Dieser vorbestimmte Abstand kann einen Mindestabstand der Unterseite eines geklemmten Solarmoduls von der Tragstruktur, insbesondere deren Befestigungsfläche, festlegen. In einem unverformten Zustand des ersten Aufnahmeabschnitts kann der plattenförmige Teil des Befestigungsabschnitts auch parallel zu dem ersten Seitenwandabschnitt angeordnet sein. Im unverformten Zustand kann insbesondere kein Abschnitt der Klemmvorrichtung verbogen sein, insbesondere nicht der weitere Seitenwandabschnitt. Somit kann der unverformte Zustand auch als nicht verformter Zustand oder unverbogener Zustand bezeichnet werden.

Der Befestigungsabschnitt ermöglicht in vorteilhafter Weise die Befestigung der Klemmvorrichtung an einer Tragstruktur oder Unterkonstruktion. Insbesondere kann die Befestigung unabhängig von einer Dimension der Befestigungsfläche der Tragstruktur erfolgen. Somit ist es möglich, dass die Klemmvorrichtung länger oder kürzer als die Befestigungsfläche ist, auf der die Klemmvorrichtung befestigt wird. Durch die einteilige Ausbildung von Befestigungsabschnitt und Aufnahmeabschnitt kann auch in diesem Fall eine zuverlässige Ableitung von Zug- und Druckkräften in die Tragkonstruktion erfolgen. Erfindungsgemäß ist an dem weiteren Seitenwandabschnitt mindestens ein Abstandshalteelement zur Gewährleistung eines Mindestabstands zwischen dem weiteren Seitenwandabschnitt und einer Tragstruktur, insbesondere deren Befestigungsfläche, angeordnet. Das Abstandshalteelement kann hierbei von dem weiteren Seitenwandabschnitt ausgebildet sein. Das Abstandshalteelement kann hierbei als längliches Element ausgebildet sein, wobei eine Längsachse des Abstandshalteelements parallel zu der Längsachse der Klemmvorrichtung orientiert sein kann. Eine Länge des Abstandshalteelements kann hierbei gleich der Länge des Seitenwandabschnitts sein. Allerdings ist es auch möglich, dass die Länge des Abstandshalteelements kürzer als die Länge des Seitenwandabschnitts ist.

Das Abstandshalteelement kann als hohl- oder vollprofilförmiges Element ausgebildet sein. Beispielsweise kann das Abstandshalteelement in einer Querschnittsebene, die senkrecht zur Längsachse orientiert ist, ein dreieck-, rechteck- oder halbkreisförmiges Profil aufweisen. Eine Spitze des dreieckförmigen Profils kann von dem weiteren Seitenwandabschnitt weg orientiert sein und insbesondere nach unten weisen.

Das Abstandshalteelement kann insbesondere am oder im Bereich eines freien Endes des weiteren Seitenwandabschnittes angeordnet sein.

Eine Höhe des Abstandshalteelements kann einem gewünschten Mindestabstand zwischen der Tragstruktur und der Unterseite des zu klemmenden Solarmoduls entsprechen oder größer als dieser Mindestabstand sein. Beispielsweise kann die Höhe des Abstandselements dem vorhergehend erläuterten Abstand zwischen Kontaktfläche und dem innenliegenden Endabschnitt des weiteren Seitenwandabschnitts entsprechen. Die Höhe des Abstandshalteelements kann im geklemmten Zustand des Solarmoduls den Abstand der Unterseite des Solarmoduls von der Tragstruktur, insbesondere von deren Befestigungsfläche, festlegen.

Weiter ist das Abstandshalteelement an einer dem Aufnahmebereich abgewandten Seite, insbesondere an einer Unterseite, des weiteren Seitenwandabschnitts angeordnet. Das Abstandshalteelement ist hierbei als erhabener Bereich an dieser Seite des weiteren Seitenwandabschnitts ausgebildet. Da das Abstandshalteelement an der Unterseite angeordnet ist, ergibt sich in vorteilhafter Weise keine Verschattung der Oberseite des Solarmoduls im geklemmten und montierten Zustand. Dies wiederum ermöglicht in vorteilhafter Weise einen effizienteren Betrieb. Weiter ergibt sich in vorteilhafter Weise, dass insbesondere im geklemmten Zustand des Solarmoduls der vorhergehend erläuterte Mindestabstand durch die Klemmvorrichtung gewährleistet wird.

Weiter ist in einem nicht verformten Zustand des weiteren Seitenwandabschnitts ein Kontaktabschnitt des Abstandshalteelements unter dem Kontaktabschnitt des Befestigungsabschnitts angeordnet. Hierdurch wird in vorteilhafter Weise die Montage des Solarmoduls an der Tragstruktur vereinfacht. So kann z.B. die Klemmvorrichtung im unverformten Zustand des weiteren Seitenwandabschnitts auf eine Befestigungsfläche der Tragstruktur aufgesetzt werden, wobei der Kontaktabschnitt des Abstandshalteelements und nicht der Kontaktabschnitt des Befestigungsabschnitts auf der Befestigungsfläche aufliegt. Dann kann die Klemmvorrichtung in diesem nicht verformten Zustand mit der Tragstruktur lose verbunden werden. Dies kann beispielsweise durch eine Teilverschraubung des Befestigungsabschnitts mit der Tragstruktur erfolgen. Dann kann das zu montierende Solarmodul in dem Aufnahmebereich angeordnet werden. Da sich der Aufnahmeabschnitt im unverformten Zustand befindet, ist dies in einfacher Art und Weise möglich. Weiter kann der Befestigungsabschnitt dann in mechanischen Kontakt mit der Befestigungsfläche der Tragstruktur gebracht werden, beispielsweise durch eine feste Verschraubung des Befestigungsabschnitts mit der Tragstruktur. Wird der Kontaktabschnitt des Befestigungsabschnitts mit der Befestigungsfläche in mechanischen Kontakt gebracht, so wird gleichzeitig der weitere Seitenwandabschnitt hin zur Unterseite des Solarmoduls, insbesondere nach oben, verbogen. Durch diese Verbiegung wird das im Aufnahmebereich angeordnete Solarmodul geklemmt.

In einer weiteren Ausführungsform ist an dem weiteren Seitenwandabschnitt ein Dichtelement-Aufnahmeabschnitt angeordnet. Das Dichtelement wird nachfolgend noch näher erläutert. Alternativ oder kumulativ kann ein Dichtelement-Aufnahmeabschnitt an dem Bodenwandabschnitt oder dem ersten Seitenwandabschnitt angeordnet sein. Beispielsweise kann der erste Seitenwandabschnitt ein stegförmiges Element aufweisen oder ausbilden, welches zur Befestigung eines Dichtelements dient.

Der Dichtelement-Aufnahmeabschnitt des weiteren Seitenwandabschnitts kann insbesondere von dem Abstandshalteelement oder einem Teil davon ausgebildet werden. Beispielsweise kann der Dichtelement-Aufnahmeabschnitt durch ein Innenvolumen eines hohlprofilförmigen Abstandshalteelements ausgebildet werden. Hierbei kann ein korrespondierender Befestigungsabschnitt des Dichtelements in dem Dichtelement-Aufnahmeabschnitt angeordnet werden, wodurch das Dichtelement mechanisch an dem weiteren Seitenwandabschnitt befestigt wird. Hierdurch ergibt sich in vorteilhafter Weise eine einfache Herstellbarkeit der Klemmvorrichtung, die zusätzlich noch ein Dichtelement umfasst.

In einer weiteren Ausführungsform umfasst die Klemmvorrichtung mindestens ein Dichtelement, wobei zumindest ein Abschnitt des Dichtelements an dem ersten und/oder ein (weiterer) Abschnitt des Dichtelements an dem weiteren Seitenwandabschnitt angeordnet ist. Insbesondere kann zumindest ein Abschnitt des Dichtelements an einer dem Aufnahmebereich zugewandten Seite oder Oberfläche des ersten und/oder weiteren Seitenwandabschnitts angeordnet sein.

Das Dichtelement kann insbesondere eine sogenannte EPDM-Dichtung ausbilden. Das Dichtelement kann in einer Querschnittsebene, die senkrecht zur vorhergehend erläuterten Längsachse orientiert ist, U-profilförmig ausgebildet sein. Eine Länge des Dichtelements kann hierbei einer Länge des Aufnahmeabschnitts entsprechen.

Das Dichtelement kann hierbei mechanisch an dem ersten und/oder weiteren Seitenwandabschnitt und/oder gegebenenfalls an dem Bodenwandabschnitt befestigt werden. Hierbei kann das Dichtelement z.B. verklemmt oder verklebt werden.

Die dem Aufnahmebereich zugewandten Oberflächen des ersten Seitenwandabschnitts, des weiteren Seitenwandabschnitts und/oder des Bodenwandabschnitts können eben oder uneben ausgebildet sein.

Eine dem ersten oder weiteren Seitenwandabschnitt abgewandte Oberfläche des entsprechenden Abschnitts des Dichtelements kann eben oder uneben ausgebildet sein. Auch eine dem Bodenwandabschnitt abgewandte Oberfläche des entsprechenden Abschnitts des Dichtelements kann eben oder uneben ausgebildet sein. Eine unebene Oberfläche kann insbesondere ein Zahnprofil aufweisen. Uneben kann bedeuten, dass die entsprechende Oberfläche Vertiefungen und/oder Erhebungen aufweist.

Auch die dem ersten und/oder dem weiteren Seitenwandabschnitt und/oder dem Bodenwandabschnitt zugewandte Oberfläche des entsprechenden Abschnitts des Dichtelements kann eben oder uneben ausgebildet sein.

Weiter kann eine dem ersten bzw. weiteren Seitenwandabschnitt zugewandte Oberfläche des entsprechenden Abschnitts des Dichtelements ein Befestigungsabschnitt oder - element zur Befestigung an dem entsprechenden Seitenwandabschnitt aufweisen. Beispielsweise kann die Oberfläche, die dem weiteren Seitenwandabschnitt zugewandt ist, einen im Querschnitt pilz-, dreieck- oder zahnförmigen Fortsatz aufweisen, der in oder an dem vorhergehend erläuterten Dichtelement-Aufnahmeabschnitt angeordnet werden kann.

Das Dichtelement kann hierbei eine vorbestimmte Dicke aufweisen. Die Dicke des Dichtelements kann hierbei in Abhängigkeit einer Dicke des Solarmoduls und einer Höhe des Aufnahmeabschnitts derart gewählt werden, dass eine zuverlässige Klemmung des Solarmoduls im Aufnahmeabschnitt der Klemmvorrichtung gewährleistet werden kann.

In einer weiteren Ausführungsform ist zumindest ein Abschnitt des Dichtelements an einem Bodenwandabschnitt des ersten Aufnahmeabschnitts angeordnet, wobei die dem Bodenwandabschnitt zugewandte Oberfläche des Abschnitts und/oder die dem Bodenwandabschnitt abgewandte Oberfläche des Abschnitts uneben, insbesondere zahnprofilförmig, ausgebildet ist.

Die unebene Ausbildung der dem Bodenwandabschnitt zugewandten Oberfläche und/oder der dem Bodenwandabschnitt abgewandten Oberfläche des Abschnitts des Dichtelements kann hierbei eine eigene und unabhängige Erfindung darstellen. Somit wird eine Klemmvorrichtung für ein Solarmodul beschrieben, wobei die Klemmvorrichtung mindestens einen ersten Aufnahmeabschnitt zur Aufnahme eines Randabschnitts des Solarmoduls aufweist oder ausbildet, wobei der erste Aufnahmeabschnitt zumindest einen ersten Seitenwandabschnitt, einen weiteren Seitenwandabschnitt und einen Bodenwandabschnitt zur Ausbildung eines Aufnahmebereichs aufweist. Weiter weist die Klemmvorrichtung ein Dichtelement auf, welches in einem Aufnahmebereich des Aufnahmeabschnitts angeordnet ist, wobei die dem Bodenwandabschnitt zugewandte Oberfläche eines Abschnitts des Dichtelements und/oder die dem Bodenwandabschnitt abgewandte Oberfläche des Abschnitts des Dichtelements uneben ausgebildet ist.

Eine unebene Ausbildung kann hierbei auch eine gekrümmte Ausbildung bezeichnen.

Hierdurch wird in vorteilhafter Weise ein elastischer Puffer zwischen einer Randseite des Solarmoduls und dem Bodenwandabschnitt geschaffen, welcher eine spielfreie Montage unter gleichzeitiger Verhinderung einer Zwängung ermöglicht. Insbesondere ist es somit nicht mehr notwendig, einen Mindestabstand von z.B. 1 mm zwischen dem Bodenwandabschnitt und der Randseite des Solarmoduls bei der Montage einzuhalten.

In einer weiteren Ausführungsform ist zumindest ein Abschnitt des Dichtelements an einem Seitenwandabschnitt des ersten Aufnahmeabschnitts angeordnet, wobei die dem Seitenwandabschnitt zugewandte Oberfläche des Abschnitts des Dichtelements und/oder die dem Seitenwandabschnitt abgewandte Oberfläche des Abschnitts des Dichtelements uneben, insbesondere zahnprofilförmig, ausgebildet ist. Hierdurch ergibt sich in vorteilhafter Weise die Möglichkeit einer flächigen Auflage des elastisch verformbaren Dichtelementes auf dem Solarmodul, was eine Verschmutzung innerhalb der Befestigungsfläche zur Moduloberfläche verhindert.

In einer weiteren Ausführungsform ist eine dem Aufnahmebereich zugewandte Oberfläche des ersten und/oder des weiteren Seitenwandabschnitts uneben, insbesondere zahnprofilförmig, ausgebildet.

In einer weiteren Ausführungsform weist ein Übergang von dem Aufnahmebereich oder von dem Dichtelement zum ersten Aufnahmeabschnitt eine vorbestimmte elektrische Leitfähigkeit auf. Der Übergang kann insbesondere elektrisch isolierend oder elektrisch leitend ausgebildet sein.

Der Übergang von dem Aufnahmebereich oder von dem Dichtelement zum ersten Aufnahmeabschnitt kann insbesondere den Übergang von einer Außenseite des Solarmoduls zu den Seitenwandabschnitten bzw. dem Bodenwandabschnitt oder einen Übergang von dem Dichtelement zu den Seitenwandabschnitten bzw. dem Bodenwandabschnitt bezeichnen.

Insbesondere kann eine dem Aufnahmebereich und somit einem geklemmten Solarmodul zugewandte Oberfläche des ersten Seitenwandabschnitts und/oder des weiteren Seitenwandabschnitts und/oder gegebenenfalls eines Bodenwandabschnitts eloxiert und/oder beschichtet, insbesondere mit einem elektrisch isolierenden Material, sein. Durch die Eloxierung und/oder Beschichtung der Klemmvorrichtung ergibt sich in vorteilhafter Weise eine geringe elektrische Leitfähigkeit als gewünschte elektrische Isolation zwischen dem Dichtelement und der Klemmvorrichtung, so dass das Solarmodul gegenüber Erdpotential elektrisch hochohmig gelagert ist.

Durch eine geringe elektrische Leitfähigkeit, insbesondere eine Isolation, kann in vorteilhafter Weise eine Betriebssicherheit erhöht werden, da im Schadenfall ein Stromfluss zwischen Solarmodul und Tragstruktur verhindert und somit eine eventuelle Brandgefahr reduziert wird. Durch eine elektrisch leitende Ausbildung des Übergangs kann in vorteilhafter Weise eine unerwünscht hohe Potentialdifferenz zwischen Solarmodul und Klemmvorrichtung vermieden werden.

Weiter vorgeschlagen wird ein Verfahren zur Montage eines Solarmoduls. In einem ersten Schritt kann eine Klemmvorrichtung gemäß einer der in dieser Erfindung erläuterten Ausführungsformen auf oder an einer Tragstruktur angeordnet werden. Insbesondere kann die Klemmvorrichtung auf einer Befestigungsfläche der Tragstruktur angeordnet werden.

In einem zweiten Schritt kann ein Randabschnitt des Solarmoduls in einem Aufnahmebereich der Klemmvorrichtung angeordnet werden. Der Aufnahmebereich kann hierbei von dem vorhergehend erläuterten Aufnahmeabschnitt ausgebildet werden. In einem dritten Schritt wird die Klemmvorrichtung an der Tragstruktur befestigt. Selbstverständlich ist es auch möglich, dass der erste und der zweite Schritt des Verfahrens vertauscht werden.

Insbesondere kann die Klemmvorrichtung in einem unverformten Zustand auf oder an der Tragstruktur angeordnet werden. Weiter kann der Randabschnitt des Solarmoduls ebenfalls in einem unverformten Zustand der Klemmvorrichtung in dem Aufnahmebereich angeordnet werden. Wie vorhergehend erläutert, können diese Schritte auch vertauscht werden. Weiter kann die Klemmvorrichtung an der Tragstruktur befestigt werden, wobei die Klemmvorrichtung während der Befestigung verformt wird. Insbesondere kann die Klemmvorrichtung derart verformt werden, dass das Solarmodul in dem Aufnahmebereich geklemmt wird.

In einer weiteren Ausführungsform wird beim bzw. während dem Befestigen der Klemmvorrichtung an der Tragstruktur der Randabschnitt zwischen dem ersten und dem weiteren Seitenwandabschnitt geklemmt. Insbesondere kann beim Befestigen der Klemmvorrichtung an der Tragstruktur der weitere Seitenwandabschnitt hin zu der Unterseite des Solarmoduls, insbesondere nach oben, verbogen werden.

Hierdurch ergibt sich in vorteilhafter Weise eine einfache Anordnung des Randabschnitts im Aufnahmebereich sowie eine dann folgende Klemmung. Diese Teilschritte vereinfachen insgesamt die Montage des Solarmoduls an der Tragstruktur.

In einer weiteren Ausführungsform wird die Klemmvorrichtung an der Tragstruktur befestigt, indem ein Befestigungsabschnitt der Klemmvorrichtung an der Tragstruktur derart befestigt wird, dass ein Kontaktabschnitt, insbesondere eine Kontaktfläche, des Befestigungsabschnitts an der Tragstruktur anfliegt, insbesondere auf der Befestigungsfläche aufliegt.

In einer weiteren Ausführungsform liegt nur ein Teil eines Kontaktabschnitts oder der vollständige Kontaktabschnitt des Befestigungsabschnitts und/oder nur ein Teil eines Kontaktabschnitts eines Abstandshalteelements oder der vollständige Kontaktabschnitt des Abstandshalteelements an der Tragstruktur an, insbesondere auf der Befestigungsfläche der Tragstruktur auf.

Hierdurch ergibt sich in vorteilhafter Weise, dass ein Solarmodul an Tragstrukturen mit unterschiedlichen Dimensionen befestigt werden kann, wobei jedoch eine gewünschte Ableitung von Zug- und Druckkräften des Solarmoduls in die Tragstruktur gewährleistet wird.

Das vorgeschlagene Verfahren ist somit mit einer Klemmvorrichtung gemäß einer der in dieser Erfindung beschriebenen Ausführungsformen durchführbar.

Weiter beschrieben wird ein Verfahren zur Herstellung einer Klemmvorrichtung. Hierbei kann ein Grundkörper bereitgestellt werden, beispielsweise in Form eines Blockes. Der Grundkörper kann hierbei aus einem gewünschten Material, beispielsweise Metall, vorzugsweise Aluminium, bestehen. Weiter kann der Grundkörper derart verformt werden, dass ein Aufnahmeabschnitt zur Aufnahme eines Randabschnitts des Solarmoduls ausgebildet wird, wobei der Aufnahmeabschnitt zumindest einen ersten Seitenwandabschnitt und einen weiteren Seitenwandabschnitt zur Ausbildung eines Aufnahmebereichs aufweist. Selbstverständlich kann der Aufnahmeabschnitt auch einen Bodenwandabschnitt umfassen. Das Umformen kann insbesondere durch ein Strangpress-Verfahren erfolgen.

Selbstverständlich wird auch ein Verfahren zur Herstellung einer Klemmvorrichtung beschrieben, welche alle notwendigen Schritte zur Bereitstellung einer Klemmvorrichtung entsprechend einer der in dieser Erfindung erläuterten Ausführungsformen umfasst.

Weiter beschrieben wird eine Anordnung aus einer Klemmvorrichtung gemäß einer der in dieser Erfindung beschriebenen Ausführungsformen und einer Tragstruktur, wobei die Klemmvorrichtung an der Tragstruktur befestigt, insbesondere starr befestigt, ist. Hierbei kann ein Kontaktabschnitt, insbesondere eine Kontaktfläche, eines Befestigungsabschnitts der Klemmvorrichtung vollständig oder unvollständig an der Tragstruktur, insbesondere einer Befestigungsfläche der Tragstruktur, anliegen. Es ist insbesondere möglich, dass ein Teil oder mehrere Teile der Klemmvorrichtung im befestigten Zustand über die Tragstruktur überstehen. Die Anordnung kann weiter mindestens ein Solarmodul umfassen, welches in einem Aufnahmebereich der Klemmvorrichtung angeordnet ist. Hierbei kann ein Randabschnitt des Solarmoduls im starr befestigten Zustand im Aufnahmebereich geklemmt sein.

Die Erfindung wird anhand mehrerer Ausführungsbeispiele näher erläutert. Die Figuren zeigen:
- Fig. 1: eine perspektivische Ansicht einer erfindungsgemäßen Klemmvorrichtung,
- Fig. 2: einen Querschnitt durch die in Fig. 1 dargestellter Klemmvorrichtung,
- Fig. 3: eine Draufsicht auf die in Fig. 1 dargestellte Klemmvorrichtung,
- Fig. 4: eine perspektivische Ansicht einer Klemmvorrichtung in einer weiteren Ausführungsform,
- Fig. 5: eine perspektivische Ansicht einer Klemmvorrichtung in einer weiteren Ausführungsform,
- Fig. 6: eine perspektivische Ansicht einer Klemmvorrichtung in einer weiteren Ausführungsform,
- Fig. 7: eine perspektivische Ansicht einer Tragstruktur mit einer erfindungsgemäßen Klemmvorrichtung,
- Fig. 8: eine perspektivische Ansicht einer weiteren Tragstruktur mit einer erfindungsgemäßen Klemmvorrichtung,
- Fig. 9: eine perspektivische Ansicht einer weiteren Tragstruktur mit einer Klemmvorrichtung,
- Fig. 10: eine Klemmvorrichtung in einem aufgesetzten und nicht befestigten Zustand,
- Fig. 11: eine Seitenansicht einer Klemmvorrichtung in einem aufgesetzten und lose befestigten Zustand und
- Fig. 12: eine Klemmvorrichtung in einem aufgesetzten und befestigten Zustand.

Nachfolgend bezeichnen gleiche Bezugszeichen Elemente mit gleichen oder ähnlichen technischen Merkmalen.

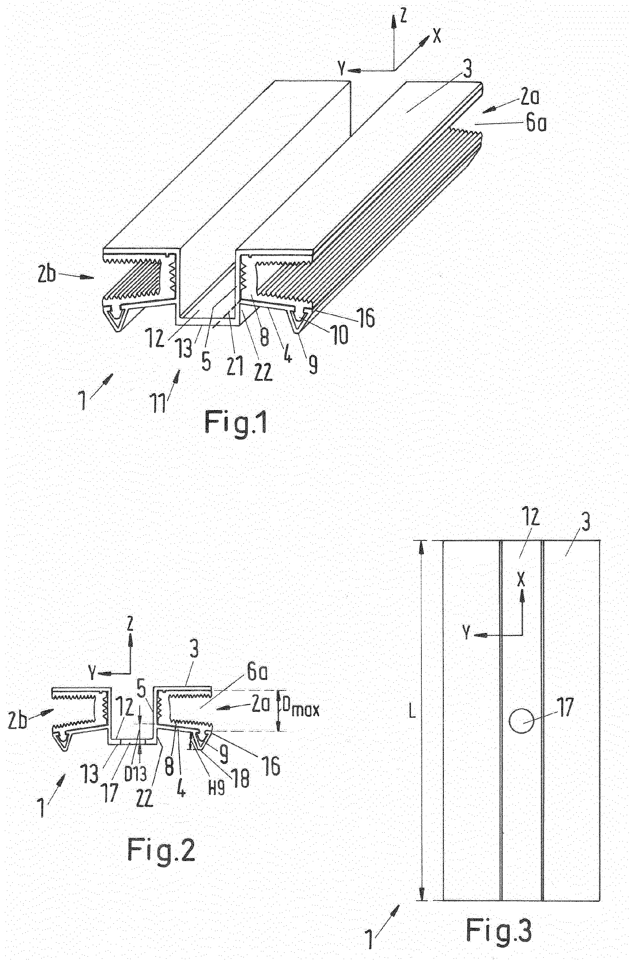

In Fig. 1 ist eine perspektivische Ansicht einer erfindungsgemäßen Klemmvorrichtung 1 dargestellt. Die Klemmvorrichtung 1 umfasst einen ersten Aufnahmeabschnitt 2a und einen weiteren Aufnahmeabschnitt 2b. Die Aufnahmeabschnitte 2a, 2b sind an entlang einer Querachse y gegenüberliegenden Seiten der Klemmvorrichtung 1 angeordnet.

Neben der Querachse y ist eine Längsachse x und eine Vertikalachse z sowie die entsprechenden Richtungen dargestellt. Die Längsachse x, Querachse y und Vertikalachse z bilden ein Referenzkoordinatensystem.

Nachfolgend wird der Einfachheit halber nur der erste Aufnahmeabschnitt 2a beschrieben. Die Ausführungen zu dem ersten Aufnahmeabschnitt 2a gelten jedoch in entsprechender Weise auch für den weiteren Aufnahmeabschnitt 2b.

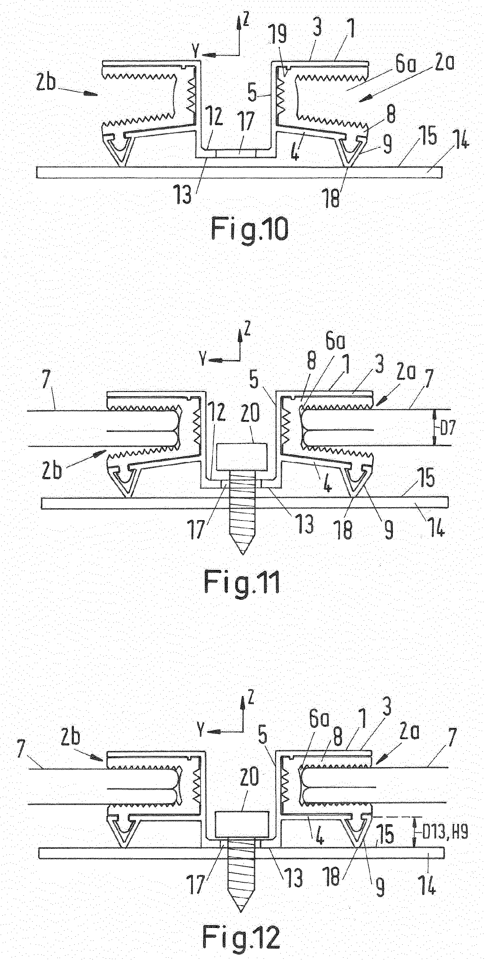

Der erste Aufnahmeabschnitt 2a umfasst einen ersten Seitenwandabschnitt 3 und einen weiteren Seitenwandabschnitt 4. Weiter umfasst der erste Aufnahmeabschnitt 2a einen Bodenwandabschnitt 5. Es ist dargestellt, dass der erste Aufnahmeabschnitt 2a in einer Querschnittsebene, die senkrecht zur Längsachse x orientiert ist, einen U-förmigen Querschnitt aufweist, wobei der erste Seitenwandabschnitt 3 einen rechten Winkel mit dem Bodenwandabschnitt 5 einschließt und wobei der weitere Seitenwandabschnitt 4 einen stumpfen Winkel, beispielsweise einen Winkel von 97,5°, mit dem Bodenwandabschnitt 5 einschließt. Die Seitenwandabschnitte 3, 4 sind plattenförmig ausgebildet. Auch der Bodenwandabschnitt ist plattenförmig ausgebildet. Der erste Aufnahmeabschnitt 2a bildet einen ersten Aufnahmebereich 6a aus, in dem ein Randbereich eines Solarmoduls 7 (siehe z.B. Fig. 11) angeordnet werden kann.

Weiter dargestellt ist ein Dichtelement 8, welches im ersten Aufnahmebereich 6a angeordnet ist und an den Oberflächen der Seitenwandabschnitte 3, 4 bzw. des Bodenwandabschnitts 5 anliegt, die dem Aufnahmebereich 6a zugewandt sind.

Die in Fig. 1 dargestellte Klemmvorrichtung 1 ist in einem unverformten, insbesondere nicht verbogenen, Zustand dargestellt.

Weiter dargestellt ist ein Abstandshalteelement 9, welches an einem freien Ende des weiteren Seitenwandabschnitts 4 angeordnet ist. Das Abstandshalteelement 9 ist hohlprofilförmig und in einer Querschnittsebene, die senkrecht zur Längsachse x orientiert ist, dreieckförmig ausgebildet. Das Abstandshalteelement 9 ist hierbei an einer dem Aufnahmebereich 6a abgewandten Oberfläche des weiteren Seitenwandabschnitts 4 angeordnet. Insbesondere wird das Abstandshalteelement 9 von dem weiteren Seitenwandabschnitt 4 ausgebildet. Das Abstandshalteelement 9 bzw. der weitere Seitenwandabschnitt 4 weist eine Durchgangsöffnung auf, die ein Innenvolumen des hohlprofilförmigen Abstandhalteelements 9 mit dem Aufnahmebereich 6a verbindet. Die Durchgangsöffnung ist hierbei als Langloch ausgebildet, deren Breite kleiner als eine Breite der Grundseite des Abstandshalteelements 9 ist.

Weiter dargestellt ist ein im Querschnitt pilzförmiger Fortsatz 10 des Dichtelements 8, welcher in dem Innenvolumen des Abstandshalteelements 9 angeordnet ist. In die Unterschneidungen des pilzförmigen Fortsatzes 10 können die das Langloch begrenzenden Abschnitte der Grundseite des Abstandshalteelements 9 eingreifen, wodurch eine mechanische Verbindung zwischen Dichtelement 8 und Klemmvorrichtung 1 gewährleistet wird. Selbstverständlich sind auch kumulative oder alternative Befestigungsarten, z.B. Klebe- oder Rastverbindungen, vorstellbar.

Weiter umfasst die Klemmvorrichtung 1 einen Befestigungsabschnitt 11. Der Befestigungsabschnitt 11 umfasst eine Grundplatte 12, deren Unterseite eine Kontaktfläche 13 aufweist. Wird die Klemmvorrichtung 1 auf einer Befestigungsfläche 15 einer Tragstruktur 14 (siehe z.B. Fig. 10) angeordnet, so steht im starr befestigten Zustand die Kontaktfläche 13 in mechanischem Kontakt mit der Befestigungsfläche 15 (siehe Fig. 10) der Tragstruktur 14. Die Grundplatte 12 ist hierbei parallel zu dem ersten Seitenwandabschnitt 3 angeordnet. Hierbei ist die Kontaktfläche 13 eine ebene Fläche, die parallel zu einer Ebene angeordnet ist, die von der Längsachse x und der Querachse y aufgespannt wird.

Der Befestigungsabschnitt kann weiter einen Verbindungsabschnitt 22 umfassen, der die Grundplatte 12 mit dem ersten Aufnahmeabschnitt 2a verbindet. Der Verbindungsabschnitt 22 kann hierbei senkrecht zur Grundplatte 12 angeordnet sein.

Der weitere Seitenwandabschnitt 4 ist um eine Biegeachse 21 verbiegbar, die parallel zu der Längsachse x der Klemmvorrichtung 1 orientiert ist. Die Biegeachse 21 kann hierbei entlang einem inneren Endabschnitt des weiteren Seitenwandabschnitts 4 verlaufen, wobei der innere Endabschnitt den Endabschnitt des weiteren Seitenwandabschnitts 4 bezeichnet, der einem freien Endabschnitt 16 gegenüberliegend angeordnet ist und der am Bodenwandabschnitt 5 fest eingespannt ist.

In Fig. 2 ist die in Fig. 1 dargestellte Klemmvorrichtung 1 in einem Querschnitt dargestellt. Wiederum wird nachfolgend nur der erste Aufnahmeabschnitt 2a beschrieben. Dargestellt ist, dass in dem nicht verformten Zustand des weiteren Seitenwandabschnittes 4 ein Abstand zwischen dem ersten und dem weiteren Seitenwandabschnitt 3, 4 hin zu den freien Enden 16 der Seitenwandabschnitte 3, 4 zunimmt. Ein maximaler Abstand Dmax zwischen dem ersten und dem weiteren Seitenwandabschnitt 3, 4 entlang der Vertikalachse z kann hierbei der Abstand zwischen den freien Enden 16 der Seitenwandabschnitte 3, 4 sein. Dieser maximale Abstand Dmax kann insbesondere um ein vorbestimmtes Maß größer als eine Dicke D7 eines Solarmoduls 7 (siehe z.B. Fig. 11) sein. Selbstverständlich kann auch der nicht dargestellte maximale Abstand zwischen freien Enden des Dichtelements 8, welches im ersten Aufnahmebereich 2a angeordnet ist, größer als die Dicke D7 des Solarmoduls 7 sein.

Weiter dargestellt ist ein Abstand D13 entlang der Vertikalachse z der Kontaktfläche 13 der Grundplatte 12 von dem inneren Endabschnitt des weiteren Seitenwandabschnitts 4. Eine Höhe H9 des Abstandshalteelements 9 unter dem weiteren Seitenwandabschnitt 4 kann hierbei gleich diesem Abstand D13 sein. Der Abstand D13 und die Höhe H9 legen einen minimalen Abstand einer Unterseite des Solarmoduls 7 von einer Befestigungsfläche 15 einer Tragstruktur 14 fest (siehe auch Fig. 12). Ist ein Dichtelement 8 im ersten Aufnahmebereich 2a angeordnet, so ist ein Abstand in Vertikalrichtung zwischen der Unterseite und der Befestigungsfläche 15 in der Regel größer als der vorbestimmte Abstand D13 bzw. die Höhe H9 des Abstandshalteelements 9.

Weiter dargestellt ist eine Durchgangsöffnung 17, die in der Grundplatte 12 angeordnet ist. Durch die Durchgangsöffnung 17 kann eine Schraube 20 (siehe z.B. Fig. 11) in eine Tragstruktur 14, z.B. in eine entsprechende Gewindebohrung, eingeführt werden, um die Klemmvorrichtung 1 mit der Tragstruktur 14 zu verschrauben.

In Fig. 2 ist dargestellt, dass die dem ersten Aufnahmebereich 2a zugewandten Oberflächen der Seitenwandabschnitte 3, 4 und des Bodenwandabschnitts 5 als ebene Flächen ausgebildet sind. Weiter ist eine Oberfläche der Abschnitte des Dichtelements 8, die an den Seitenwandabschnitten 3, 4 anliegen und die dem Aufnahmebereich 6a zugewandt sind, uneben, insbesondere gezahnt, ausgebildet. Eine dem Aufnahmebereich 6a zugewandte Oberfläche des Abschnitts des Dichtelements 8, der an dem Bodenwandabschnitt 5 anliegt, ist eben ausgebildet. Allerdings ist die Oberfläche des Abschnitts des Dichtelements 8, der an dem Bodenwandabschnitt 5 angeordnet ist, und der dem Bodenwandabschnitt 5 zugewandt ist, uneben, insbesondere ebenfalls gezahnt, ausgebildet. Das Dichtelement 8 kann insbesondere als druckelastisches EPDM-Dichtelement ausgebildet sein. Die zahnprofilförmige Ausbildung der unebenen Oberflächen ermöglicht in vorteilhafter Weise eine Montage eines Solarmoduls 7 ohne Zwängung und ohne Spiel.

Weiter ist in Fig. 2 dargestellt, dass ein Kontaktabschnitt 18, insbesondere eine Spitze des Abstandshalteelements 9, im unverformten Zustand des ersten Aufnahmeabschnitts 2a in der Vertikalrichtung unterhalb der Kontaktfläche 13 angeordnet ist.

In Fig. 3 ist eine Draufsicht auf die in Fig. 1 dargestellte Klemmvorrichtung 1 dargestellt. Dargestellt ist die Durchgangsöffnung 17, die in der Grundplatte 12 angeordnet ist und ein erfindungsgemäßes Befestigungsmittel der Klemmvorrichtung 1 darstellt. Weiter ist eine Länge L der Klemmvorrichtung 1 dargestellt, wobei die Länge L der Klemmvorrichtung 1 einer Länge der Aufnahmebereiche 2a, 2b (siehe Fig. 1) und einer Länge des Abstandshalteelements 9 entsprechen kann. Die Länge L wird hierbei entlang der Längsachse x gemessen.

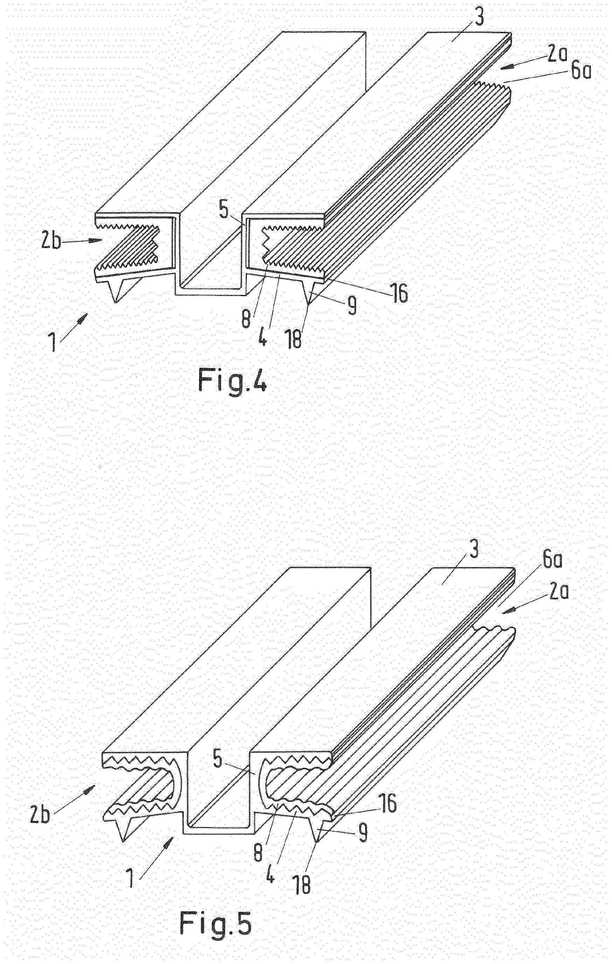

Fig. 4 zeigt eine perspektivische Ansicht einer erfindungsgemäßen Klemmvorrichtung 1 in einer weiteren Ausführungsform. Wiederum wird nur der erste Aufnahmeabschnitt 2a beschrieben. Im Unterschied zu der in Fig. 1 dargestellten Ausführungsform sind alle den Seitenwandabschnitte 3, 4 sowie dem Bodenwandabschnitt 5 zugewandten Oberflächen des Dichtelements 8 eben ausgebildet. Dies bedeutet, dass diese Oberflächen vollflächig an den entsprechenden Oberflächen der Seitenwandabschnitte 3, 4 und des Bodenwandabschnitts 5 anliegen. Weiter ist im Unterschied zu der in Fig. 1 dargestellten Ausführungsform die dem ersten Aufnahmebereich 6a zugewandte Oberfläche des Abschnitts des Dichtelements 8, der an dem Bodenwandabschnitt 5 anliegt, uneben, insbesondere zahnprofilförmig, ausgebildet.

Weiter ist im Unterschied zu der in Fig. 1 dargestellten Ausführungsform kein pilzförmiger Fortsatz 10 des Dichtelements 8 zur Klemmung des Dichtelements 8 mit dem ersten Aufnahmeabschnitt 6a gegeben. Vielmehr ist das Dichtelement 8 an die Seitenwandabschnitte 3, 4 sowie den Bodenwandabschnitt 5 angeklebt.

Weiter ist im Unterschied zu der in Fig. 1 dargestellten Ausführungsform das Abstandshalteelement 9 vollprofilförmig ausgebildet. Weiter dargestellt ist, dass das Abstandshalteelement 9 zwar im Bereich des freien Endes 16 des weiteren Seitenwandabschnitts 4, jedoch nicht unmittelbar am sondern beabstandet vom freien Ende 16, angeordnet ist.

In Fig. 5 ist eine perspektivische Ansicht einer Klemmvorrichtung 1 in einer weiteren Ausführungsform dargestellt. Im Unterschied zu der in Fig. 4 dargestellten Ausführungsform sind die dem ersten Aufnahmebereich 6a zugewandten Oberflächen der Seitenwandabschnitte 3, 4 uneben, insbesondere zahnprofilförmig, ausgebildet. Eine dem ersten Aufnahmebereich 6a zugewandte Oberfläche des Bodenwandabschnittes 5 ist in Bezug auf den ersten Aufnahmebereich 6a konkav gekrümmt ausgebildet. Entsprechend sind Oberflächen der Abschnitte des Dichtelements 8 ausgebildet. Insbesondere sind die dem ersten Aufnahmebereich 6a zugewandten Oberflächen des Dichtelements 8 im Bereich von Abschnitten, die an den Seitenwandabschnitten 3, 4 anliegen, uneben, insbesondere zahnprofilförmig, ausgebildet. Eine Oberfläche des Dichtelements 8 ist im Bereich des Abschnitts, der an dem Bodenwandabschnitt 5 anliegt, in Bezug auf den ersten Aufnahmebereich 6a ebenfalls konkav gekrümmt ausgebildet.

Die den Seitenwandabschnitten 3,4 bzw. dem Bodenwandabschnitt 5 zugewandten Abschnitte des Dichtelements 8 sind derart ausgebildet, dass eine formschlüssige Anordnung des Dichtelements 8 mit den Seitenwandabschnitten 3, 4 und dem Bodenwandabschnitt 5 ermöglicht wird. Insbesondere sind die Abschnitte des Dichtelements 8, die den Seitenwandabschnitten 3, 4 zugewandt sind, ebenfalls uneben, insbesondere zahnprofilförmig, ausgebildet. Auch die Oberfläche des Abschnitts des Dichtelements 8, der dem Bodenwandabschnitt 5 zugewandt ist, ist gekrümmt ausgebildet.

Wie bei der in Fig. 4 dargestellten Ausführungsform der Klemmvorrichtung ist das Abstandshalteelement 9 vollprofilförmig ausgebildet und im Bereich des freien Endes 16, jedoch nicht unmittelbar am freien Ende, des weiteren Seitenwandabschnitts 4 angeordnet.

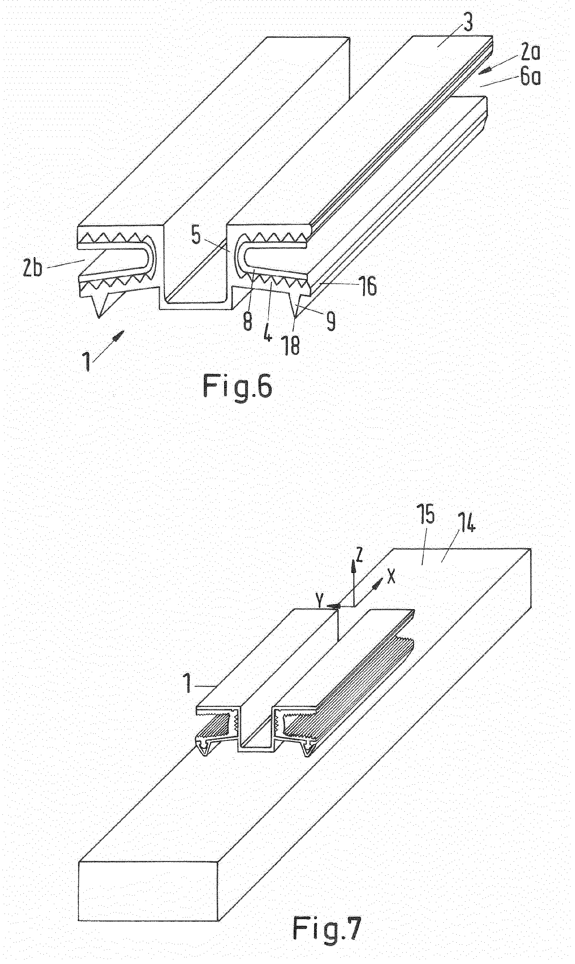

Fig. 6 zeigt eine perspektivische Ansicht einer erfindungsgemäßen Klemmvorrichtung 1 in einer weiteren Ausführungsform. Im Unterschied zu der in Fig. 5 dargestellten Ausführungsform sind die dem ersten Aufnahmebereich 6a zugewandten Oberflächen der Abschnitte des Dichtelements 8 eben ausgebildet. Ebenso sind die den Seitenwandabschnitten 3, 4 und dem Bodenwandabschnitt 5 zugewandten Oberflächen der entsprechenden Abschnitte des Dichtelements 8 eben, also nicht gezahnt, ausgebildet.

In Fig. 7 ist eine perspektivische Ansicht der in Fig. 1 dargestellten Klemmvorrichtung 1 und einer Tragstruktur 14 dargestellt. Die Tragstruktur 14 kann beispielsweise als Tragbalken ausgebildet sein. Die Tragstruktur 14 kann eine ebene Befestigungsfläche 15 aufweisen.

In Fig. 7 ist dargestellt, dass eine Länge der Tragstruktur 14 größer als eine Länge L (siehe Fig. 3) der Klemmvorrichtung 1 ist und eine Breite der Tragstruktur 14 größer als eine Breite der Klemmvorrichtung 1. Die Klemmvorrichtung 1 ist hierbei derart auf der Befestigungsfläche 15 angeordnet, dass die Längsachse x der Klemmvorrichtung 1 parallel zur zentralen Längsachse (nicht dargestellt) der Tragstruktur 14 orientiert ist. In diesem Fall liegt die Kontaktspitze 18 des Abstandshalteelements 9 mit ihrer Gesamtlänge auf der Befestigungsfläche 15 auf. Die Klemmvorrichtung 1 ist hierbei in einem unverformten Zustand 1 dargestellt, wobei noch kein Solarmodul 7 durch die Klemmvorrichtung 1 geklemmt wird.

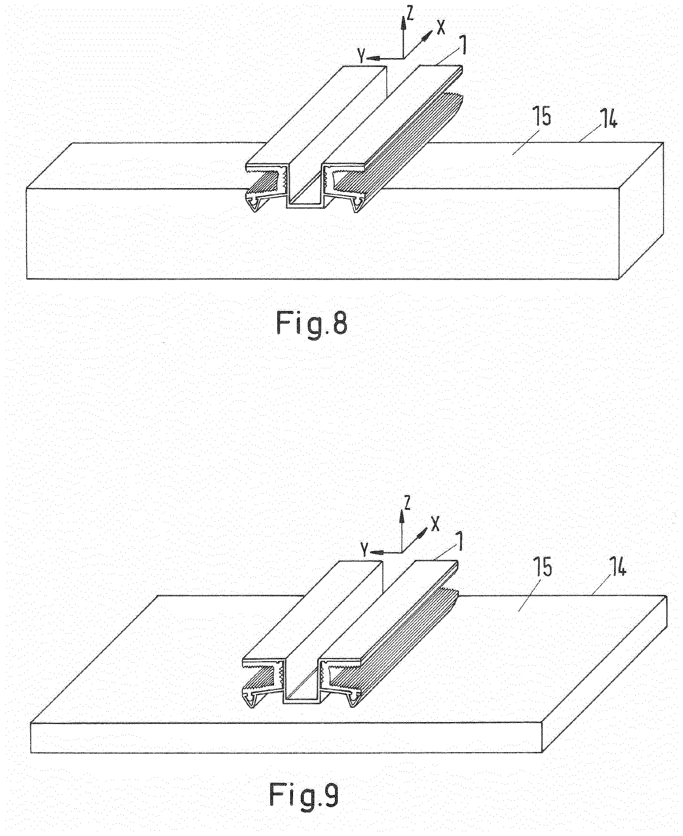

In Fig. 8 ist eine perspektivische Ansicht einer Klemmvorrichtung 1 entsprechend der in Fig. 1 dargestellten Ausführungsform dargestellt, die im unverformten Zustand auf einer Befestigungsfläche 15 einer weiteren Tragstruktur 14 angeordnet ist. Hierbei ist die Klemmvorrichtung 1 derart auf der balkenförmigen Tragstruktur 14 angeordnet, dass die zentrale Längsachse x der Klemmvorrichtung 1 quer zur zentralen Längsachse der Tragstruktur 14 orientiert ist. In diesem Fall ist also die Querachse y der Klemmvorrichtung 1 parallel zur zentralen Längsachse der Tragstruktur 14 angeordnet. Weiter ist eine Breite der Tragstruktur 14 kleiner als die Länge L (siehe Fig. 3) der Klemmvorrichtung 1. Somit liegt die Kontaktspitze 18 der Klemmvorrichtung 1 nicht mit ihrer Gesamtlänge auf der Befestigungsfläche 15 auf. Aufgrund der einteiligen Ausbildung der Klemmvorrichtung 1 weist die Klemmvorrichtung 1 jedoch eine hohe Biegesteifigkeit um eine Biegeachse, die parallel zur Querachse y orientiert ist, auf. Somit kann auch in dem in Fig. 8 dargestellten Ausführungsbeispiel, in dem Teile der Klemmvorrichtung 1 über die Tragstruktur 14 überstehen, eine gewünschte Kraftableitung von Zug- und Druckkräften, die auf ein Solarmodul 7 (siehe z.B. Fig. 11) wirken, in die Tragstruktur 14 gewährleistet werden.

In Fig. 9 ist eine perspektivische Ansicht einer Tragstruktur 14 dargestellt, auf der eine Klemmvorrichtung 1 entsprechend der in Fig. 1 dargestellten Ausführungsform angeordnet ist. Wie bei dem in Fig. 8 dargestellten Ausführungsbeispiel ist die Längsachse x der Klemmvorrichtung 1 quer zu einer zentralen Längsachse der Tragstruktur 14 orientiert. Somit ist die Querachse y parallel zur zentralen Längsachse orientiert. Allerdings ist eine Breite der Tragstruktur 14 größer als die Länge L (siehe Fig. 3) der Klemmvorrichtung 1, sodass die Kontaktspitze 18 des Abstandshalteelements 9 der Klemmvorrichtung 1 mit ihrer gesamten Länge auf der Befestigungsfläche 15 aufliegt.

Die in der Fig. 7, Fig. 8 und Fig. 9 dargestellten Ausführungsbeispiele zeigen, dass die Klemmvorrichtung 1 zur Befestigung von Solarmodulen 7 an verschiedenen Arten von Tragstrukturen 14 möglich ist. Je nach Orientierung der Solarmodule 7 und der Tragstruktur 14 können die Klemmvorrichtungen 1 zur Aufnahme von Abschnitten einer Stirnseite oder einer Längsseite eines Solarmoduls 7 (siehe z.B. Fig. 11) dienen. Die Klemmvorrichtung 1 ermöglicht somit die Befestigung an schmalen Unterkonstruktionen, breiten Unterkonstruktionen, wobei die Unterkonstruktionen, insbesondere Balken der Unterkonstruktion, entweder parallel zu Stirnseiten der Solarmodule 7 oder Längsseiten der Solarmodule 7 orientiert sein können.

In Fig. 10 ist ein Querschnitt durch eine Klemmvorrichtung 1 dargestellt, die auf einer Befestigungsfläche 15 einer Tragstruktur 14 in einem unverformten Zustand und ohne aufgenommenes Solarmodul 7 (siehe Fig. 11) dargestellt ist. Der in Fig. 10 dargestellte Zustand kann einen Ausgangszustand bei einer Montage eines Solarmoduls 7 mittels einer Klemmvorrichtung 1 darstellen. Die Klemmvorrichtung 1 ist hierbei entsprechend der in Fig. 1 dargestellten Ausführungsform ausgebildet. In Fig. 10 ist insbesondere auch ein Befestigungssteg 19 dargestellt, der an einer dem ersten Aufnahmebereich 6a zugewandten Oberfläche des ersten Seitenwandabschnitts 3 angeordnet ist. Dieser Steg 19 dient ebenfalls zur Befestigung des Dichtelements 8. Da im unverformten Zustand die Kontaktspitzen 18 der Abstandshalteelemente 9 in der Vertikalrichtung unterhalb der Kontaktfläche 13 der Grundplatte 12 angeordnet sind, liegt die Kontaktfläche 13 im Ausgangszustand nicht an der Befestigungsfläche 15 an. Vielmehr sind im Ausgangszustand nur die Kontaktspitzen 18 der Abstandshalteelemente 9 in mechanischem Kontakt mit der Befestigungsfläche 15.

In Fig. 11 ist ein Querschnitt durch eine Klemmvorrichtung 1 dargestellt, die auf einer Befestigungsfläche 15 einer Tragstruktur 14 angeordnet ist. Hierbei ist die Klemmvorrichtung 1 lose mit der Tragstruktur 14 verbunden (loser Befestigungszustand). Weiter ist ein Randbereich eines Solarmoduls 7 in dem ersten Aufnahmebereich 6a und ein weiteres Solarmodul 7 in dem weiteren Aufnahmebereich 2b der Klemmvorrichtung 1 angeordnet. Die Klemmvorrichtung 1 befindet sich jedoch im unverformten Zustand. Insbesondere ist der weitere Seitenwandabschnitt 4 in einem unverbogenen Zustand. In Fig. 11 ist dargestellt, dass eine Schraube 20 sich durch die Durchgangsöffnung 17 der Grundplatte 12 in die Tragstruktur 14 erstreckt. Hierbei ist die Klemmvorrichtung 1 durch die Schraube 18 lose mit der Tragstruktur 14 verbunden. Dies kann bedeuten, dass zumindest in Vertikalrichtung keine form- und/oder kraftschlüssige Verbindung zwischen Tragstruktur 14 und Klemmvorrichtung 1 gegeben ist. Die lose Verbindung kann insbesondere eine Verbindung bezeichnen, bei der die Klemmvorrichtung 1 relativ zur Tragstruktur 14 noch in eingeschränktem Maße beweglich ist.

In Fig. 11 ist ersichtlich, dass eine einfache Einführung von Solarmodulen 7 in die Aufnahmebereiche 6a der Aufnahmeabschnitte 2a, 2b gegeben ist, da ein minimaler Abstand zwischen den Abschnitten des Dichtelements 8, die an den Seitenwandabschnitten 3, 4 anliegen, größer als oder gleich einer Dicke D7 des Solarmoduls ist.

Der Übergang von dem in Fig. 10 dargestellten Ausgangszustand in den in Fig. 11 dargestellten losen Befestigungszustand kann erreicht werden, indem entweder zuerst die Klemmvorrichtung 1 über die Schraube 20 lose mit der Tragstruktur 14 verbunden und dann Solarmodule 7 in die Aufnahmebereiche 6a der Aufnahmeabschnitte 2a, 2b eingeführt werden oder zuerst Solarmodule 7 in die Aufnahmebereiche 6a der Aufnahmeabschnitte 2a, 2b eingeführt und dann die Klemmvorrichtung 1 über die Schraube 18 lose mit der Tragstruktur 14 verbunden wird.

In Fig. 11 befindet sich die Klemmvorrichtung weiter im unverformten Zustand, sodass die Kontaktfläche 13 der Grundplatte 12 weiterhin in Vertikalrichtung beabstandet von der Befestigungsfläche 15 ist. Somit berühren, wie in Fig. 10 dargestellt, weiterhin nur die Kontaktspitzen 18 der Abstandshalteelemente 9 die Befestigungsfläche 15.

In Fig. 12 ist ein Querschnitt durch eine Klemmvorrichtung 1 in einem starr befestigten Zustand dargestellt, wobei in den Aufnahmebereichen 6a der Aufnahmeabschnitte 2a, 2b Solarmodule 7 angeordnet sind. In dem starr befestigten Zustand ist die Klemmvorrichtung 1 mittels der Schraube 20 kraftschlüssig mit der Tragstruktur 14 verbunden. Weiter liegt die Kontaktfläche 13 an der Befestigungsfläche 15 der Tragstruktur 14 an. Durch das Einschrauben der Schraube 20 wird die Grundplatte 12, insbesondere deren Kontaktfläche 13, hin zur Tragstruktur 14, insbesondere hin zur Befestigungsfläche 15, bewegt. Durch die einteilige Ausbildung der Aufnahmeabschnitte 2a sowie der Grundplatte 12 wird bei dieser Bewegung der weitere Seitenwandabschnitt 4 über das Abstandshalteelement 9 hin zur Unterseite eines aufgenommenen Solarmoduls 7 verbogen. Hierdurch wird der Randbereich des Solarmoduls 7 in dem Aufnahmebereich 6a des entsprechenden Aufnahmeabschnitts 2a, 2b geklemmt. Im geklemmten Zustand liegt das Dichtelement 8 an den Außenseiten des Solarmoduls 7 an.

Nicht dargestellt ist, dass die dem Aufnahmebereich 6a zugewandten Oberflächen der Seitenwandabschnitte 3, 4 bzw. des Bodenwandabschnittes 5 eloxiert sein können, um eine elektrische Isolation zwischen der Klemmvorrichtung 1 und dem Solarmodul 7 zu gewährleisten.

Hierdurch kann sich in vorteilhafter Weise eine Brandgefahr reduzieren, da kein Stromfluss erfolgen kann. Eine niederohmige Verbindung kann jedoch wünschenswert sein, wenn kein oder nur ein möglichst geringer Potentialunterschied zwischen dem Modul und der Tragstruktur 14 gefordert ist. In Fig. 12 ist weiter ersichtlich, dass zwischen der Befestigungsfläche 15 und einer Unterseite des Solarmoduls 7 ein gewünschter Mindestabstand durch die Ausbildung der Klemmvorrichtung 1, insbesondere durch das Vorsehen des Abstandshalteelements 9, gegeben ist.

Insgesamt wird somit eine Klemmvorrichtung 1 beschrieben, die eine Reduktion der Herstellungskosten ermöglicht, eine erhöhte Sicherheit bei einer korrekten Solarmodulmontage gewährleistet sowie eine Modulmontage vereinfacht.

### Bezugszeichenliste

- 1: Klemmvorrichtung
- 2a: erster Aufnahmeabschnitt
- 2b: weiterer Aufnahmeabschnitt
- 3: erster Seitenwandabschnitt
- 4: weiterer Seitenwandabschnitt
- 5: Bodenwandabschnitt
- 6a: erster Aufnahmebereich
- 7: Solarmodul
- 8: Dichtelement
- 9: Abstandshalteelement
- 10: pilzförmiger Fortsatz
- 11: Befestigungsabschnitt
- 12: Grundplatte
- 13: Kontaktfläche
- 14: Tragstruktur
- 15: Befestigungsfläche
- 16: freies Ende
- 17: Durchgangsöffnung
- 18: Kontaktspitze
- 19: Steg
- 20: Schraube
- 21: Biegeachse
- 22: Verbindungsabschnitt
- H9: Höhe des Abstandselements
- Dmax: maximaler Abstand
- D13: vorbestimmter Abstand
- D7: Dicke des Solarmoduls

## Patentansprüche

1. Klemmvorrichtung für ein Solarmodul (7), wobei die Klemmvorrichtung (1) mindestens einen ersten Aufnahmeabschnitt (2a) zur Aufnahme eines Randabschnitts des Solarmoduls (7) aufweist oder ausbildet, wobei der erste Aufnahmeabschnitt (2a) zumindest einen ersten Seitenwandabschnitt (3) und einen weiteren Seitenwandabschnitt (4) zur Ausbildung eines Aufnahmebereichs (6a) aufweist, wobei der erste Aufnahmeabschnitt (2a) einteilig ausgebildet ist,
wobei der Elastizitätsmodul eines Materials des ersten Aufnahmeabschnitts (2a) größer als der Elastizitätsmodul von Gummi ist,
wobei die Klemmvorrichtung (1) einen Befestigungsabschnitt (11) zur Befestigung an einer Tragstruktur (14) aufweist oder ausbildet, wobei der Befestigungsabschnitt (11) einen Kontaktabschnitt zur Auflage auf der Tragstruktur (14) aufweist, wobei an einer Unterseite des weiteren Seitenwandabschnitts (4) mindestens ein als erhabener Bereich ausgebildetes Abstandshalteelement (9) zur Gewährleistung eines Mindestabstands zwischen dem weiteren Seitenwandabschnitt (4) und einer Tragstruktur (14) angeordnet ist, wobei in einem nicht verformten Zustand des weiteren Seitenwandabschnitts (4) ein Kontaktabschnitt des Abstandshalteelements (9) unter dem Kontaktabschnitt des Befestigungsabschnitts (11) angeordnet ist,
**dadurch gekennzeichnet, dass**
der Kontaktabschnitt des Befestigungsabschnitts entlang einer Vertikalachse (z) mit einem vorbestimmten Abstand von einem innenliegenden Endabschnitt des weiteren Seitenwandabschnitts (4) angeordnet ist, wobei ein Verbindungsabschnitt (22) zwischen dem innenliegenden Endabschnitt und dem Kontaktabschnitt des Befestigungsabschnitts (11) angeordnet ist, wobei der innenliegende Endabschnitt ein dem freien Endabschnitt (16) des weiteren Seitenwandabschnitts (4) gegenüberliegenden Endabschnitt ist, wobei die Vertikalachse (z) parallel zu einer Oberflächennormalen einer Ober- oder Unterseite eines Solarmoduls (7) orientiert ist, wenn dieses in dem Aufnahmeabschnitt (2a) der Klemmvorrichtung aufgenommen ist.

2. Klemmvorrichtung nach Anspruch 1, **dadurch gekennzeichnet, dass** zumindest der weitere Seitenwandabschnitt (4) um eine Biegeachse (21) verbiegbar ist, wobei die Biegeachse (21) parallel zu einer Längsachse der Klemmvorrichtung (1) orientiert ist.

3. Klemmvorrichtung nach einem der vorangegangenen Ansprüche, **dadurch gekennzeichnet, dass** in einem nicht verformten Zustand des weiteren Seitenwandabschnitts (4) der weitere Seitenwandabschnitt (4) mit einem Winkel größer als 0° und kleiner als 90° gegenüber dem ersten Seitenwandabschnitt (3) geneigt ist.

4. Klemmvorrichtung nach einem der vorangegangenen Ansprüche, **dadurch gekennzeichnet, dass** in einem nicht verformten Zustand des weiteren Seitenwandabschnitts (4) eine maximaler Abstand (Dmax) zwischen dem ersten und dem weiteren Seitenwandabschnitt (3, 4) größer als eine Dicke (D7) eines zu klemmenden Solarmoduls (7) ist.

5. Klemmvorrichtung nach einem der vorangegangenen Ansprüche, **dadurch gekennzeichnet, dass** zumindest der erste Aufnahmeabschnitt (2a) aus Metall ausgebildet ist.

6. Klemmvorrichtung nach einem der vorangegangenen Ansprüche, **dadurch gekennzeichnet, dass** an dem weiteren Seitenwandabschnitt (4) ein Dichtelement-Aufnahmeabschnitt angeordnet ist.

7. Klemmvorrichtung nach einem der vorangegangenen Ansprüche, **dadurch gekennzeichnet, dass** die Klemmvorrichtung (1) mindestens ein Dichtelement (8) umfasst, wobei zumindest ein Abschnitt des Dichtelements (8) an dem ersten und/oder weiteren Seitenwandabschnitt (3, 4) angeordnet ist.

8. Klemmvorrichtung nach Anspruch 7, **dadurch gekennzeichnet, dass** zumindest ein Abschnitt des Dichtelements (8) an einem Bodenwandabschnitt (5) des ersten Aufnahmeabschnitts (2a) angeordnet ist, wobei die dem Bodenwandabschnitt (5) zugewandte Oberfläche des Abschnitts des Dichtelements (8) und/oder die dem Bodenwandabschnitt (5) abgewandte Oberfläche des Abschnitts des Dichtelements (8) uneben ausgebildet ist.

9. Klemmvorrichtung nach einem der Ansprüche 7 oder 8, **dadurch gekennzeichnet, dass** zumindest ein Abschnitt des Dichtelements (8) an einem Seitenwandabschnitt (3, 4) des ersten Aufnahmeabschnitts (2a) angeordnet ist, wobei die dem Seitenwandabschnitt (3, 4) zugewandte Oberfläche des Abschnitts des Dichtelements (8) und/oder die dem Seitenwandabschnitt (3, 4) abgewandte Oberfläche des Abschnitts des Dichtelements (8) uneben ausgebildet ist.

10. Klemmvorrichtung nach einem der vorangegangenen Ansprüche, **dadurch gekennzeichnet, dass** eine dem Aufnahmebereich (6a) zugewandte Oberfläche des ersten und/oder des weiteren Seitenwandabschnitts (3, 4) uneben ausgebildet ist.

11. Klemmvorrichtung nach einem der vorangegangenen Ansprüche, **dadurch gekennzeichnet, dass** ein Übergang von dem Aufnahmebereich (6a) oder von dem Dichtelement (8) zum ersten Aufnahmeabschnitt (2a) eine vorbestimmte elektrische Leitfähigkeit aufweist.

12. Verfahren zur Montage eines Solarmoduls, wobei eine Klemmvorrichtung (1) gemäß einer der Ansprüche 1 bis 11 auf oder an einer Tragstruktur (14) angeordnet wird, wobei ein Randabschnitt des Solarmoduls (7) in einem Aufnahmebereich (6a) der Klemmvorrichtung (1) angeordnet wird, wobei die Klemmvorrichtung (1) an der Tragstruktur (14) befestigt wird.

13. Verfahren nach Anspruch 12, **dadurch gekennzeichnet, dass** beim Befestigen der Klemmvorrichtung (1) an der Tragstruktur (14) der Randabschnitt zwischen dem ersten und dem weiteren Seitenwandabschnitt (3, 4) geklemmt wird.

14. Verfahren nach Anspruch 12 oder 13, **dadurch gekennzeichnet, dass** die Klemmvorrichtung (1) an der Tragstruktur (14) befestigt wird, indem ein Befestigungsabschnitt (11) der Klemmvorrichtung (1) an der Tragstruktur (14) derart befestigt wird, dass ein Kontaktabschnitt des Befestigungsabschnitts (11) an der Tragstruktur (14) anliegt.

15. Verfahren nach Anspruch 14, **dadurch gekennzeichnet, dass** nur ein Teil eines Kontaktabschnitts oder der vollständige Kontaktabschnitt des Befestigungsabschnitts (11) und/oder nur ein Teil eines Kontaktabschnitts eines Abstandshalteelements (9) oder der vollständige Kontaktabschnitt des Abstandshalteelements (9) an der Tragstruktur (14) anliegt.

## Claims

1. Clamping device for a solar module (7), wherein the clamping device (1) has or forms at least a first receiving portion (2a) for receiving an edge portion of the solar module (7), wherein the first receiving portion (2a) has at least a first side wall portion (3) and an additional side wall portion (4) for constructing a receiving region (6a), wherein the first receiving portion (2a) is constructed in an integral manner, wherein the elasticity modulus of a material of the first receiving portion (2a) is greater than the elasticity modulus of rubber,
wherein the clamping device (1) has or forms a securing portion (11) for securing to a carrier structure (14), wherein the securing portion (11) has a contact portion for support on the carrier structure (14),
wherein at least one spacer element (9) which is constructed as a raised region is arranged at a lower side of the additional side wall portion (4) in order to ensure a minimum spacing between the additional side wall portion (4) and a carrier structure (14), wherein, in a non-deformed state of the additional side wall portion (4), a contact portion of the spacer element (9) is arranged below the contact portion of the securing portion (11),
**characterized in that**
the contact portion of the securing portion is arranged along a vertical axis (z) with a predetermined spacing from an inner end portion of the additional side wall portion (4), wherein a connection portion (22) is arranged between the inner end portion and the contact portion of the securing portion (11), wherein the inner end portion is an end portion opposite the free end portion (16) of the additional side wall portion (4), wherein the vertical axis (z) is orientated parallel to a surface normal of an upper or lower side of a solar module (7) when the latter is received in the receiving portion (2a) of the clamping device.

2. Clamping device according to Claim 1, **characterized in that** at least the additional side wall portion (4) can be bent about a bending axis (21), wherein the bending axis (21) is orientated parallel with a longitudinal axis of the clamping device (1).

3. Clamping device according to either of the preceding claims, **characterized in that**, in a non-deformed state of the additional side wall portion (4), the additional side wall portion (4) is inclined at an angle greater than 0° and less than 90° with respect to the first side wall portion (3).

4. Clamping device according to one of the preceding claims, **characterized in that**, in a non-deformed state of the additional side wall portion (4), a maximum spacing (Dmax) between the first and the additional side wall portion (3, 4) is greater than a thickness (D7) of a solar module (7) which is intended to be clamped.

5. Clamping device according to one of the preceding claims, **characterized in that** at least the first receiving portion (2a) is constructed from metal.

6. Clamping device according to one of the preceding claims, **characterized in that** a sealing element receiving portion is arranged on the additional side wall portion (4) .

7. Clamping device according to one of the preceding claims, **characterized in that** the clamping device (1) comprises at least one sealing element (8), wherein at least a portion of the sealing element (8) is arranged on the first and/or additional side wall portion (3, 4).

8. Clamping device according to Claim 7, **characterized in that** at least a portion of the sealing element (8) is arranged on a base wall portion (5) of the first receiving portion (2a), wherein the surface of the portion of the sealing element (8) facing the base wall portion (5) and/or the surface of the portion of the sealing element (8) facing away from the base wall portion (5) is constructed in a non-planar manner.

9. Clamping device according to either of Claims 7 and 8, **characterized in that** at least a portion of the sealing element (8) is arranged on a side wall portion (3, 4) of the first receiving portion (2a), wherein the surface of the portion of the sealing element (8) facing the side wall portion (3, 4) and/or the surface of the portion of the sealing element (8) facing away from the side wall portion (3, 4) is constructed in a non-planar manner.

10. Clamping device according to one of the preceding claims, **characterized in that** a surface of the first and/or the additional side wall portion (3, 4) facing the receiving region (6a) is constructed in a non-planar manner.

11. Clamping device according to one of the preceding claims, **characterized in that** a transition from the receiving region (6a) or from the sealing element (8) to the first receiving portion (2a) has a predetermined electrical conductivity.

12. Method for assembling a solar module, wherein a clamping device (1) according to one of Claims 1 to 11 is arranged at or on a carrier structure (14), wherein an edge portion of the solar module (7) is arranged in a receiving region (6a) of the clamping device (1), wherein the clamping device (1) is secured to the carrier structure (14).

13. Method according to Claim 12, **characterized in that**, when the clamping device (1) is secured to the carrier structure (14), the edge portion is clamped between the first and the additional side wall portion (3, 4).

14. Method according to Claim 12 or 13, **characterized in that** the clamping device (1) is secured to the carrier structure (14) by a securing portion (11) of the clamping device (1) being secured to the carrier structure (14) in such a manner that a contact portion of the securing portion (11) abuts the carrier structure (14).

15. Method according to Claim 14, **characterized in that** only part of a contact portion or the complete contact portion of the securing portion (11) and/or only part of a contact portion of a spacer element (9) or the complete contact portion of the spacer element (9) abuts the carrier structure (14).

## Revendications

1. Dispositif de serrage pour un module solaire (7), dans lequel le dispositif de serrage (1) comprend ou forme au moins une première partie de réception (2a) destinée à la réception d'une partie de bord du module solaire (7), dans lequel la première partie de réception (2a) comprend au moins une première partie de paroi latérale (3) et une autre partie de paroi latérale (4) servant à former une région de réception (6a),
dans lequel la première partie de réception (2a) est formée d'une seule partie,
dans lequel le module d'élasticité d'un matériau de la première partie de réception (2a) est supérieur au module d'élasticité du caoutchouc,
dans lequel le dispositif de serrage (1) comprend ou forme une partie de fixation (11) servant à la fixation à une structure de support (14), dans lequel la partie de fixation (11) comprend une partie de contact pour l'appui sur la structure de support (14),
dans lequel, sur un côté inférieur de l'autre partie de paroi latérale (4), est disposé au moins un élément d'espacement (9) formé en tant que région en relief servant à garantir une distance minimale entre l'autre partie de paroi latérale (4) et une structure de support (14), dans lequel une partie de contact de l'élément d'espacement (9) est disposée sous la partie de contact de la partie de fixation (11) dans un état non déformé de l'autre partie de paroi latérale (4),
**caractérisé en ce que**
la partie de contact de la partie de fixation est disposée le long d'un axe vertical (z) à une distance prédéfinie d'une partie d'extrémité intérieure de l'autre partie de paroi latérale (4), une partie de liaison (22) étant disposée entre la partie d'extrémité intérieure et la partie de contact de la partie de fixation (11), la partie d'extrémité intérieure étant une partie d'extrémité opposée à la partie d'extrémité libre (16) de l'autre partie de paroi latérale (4), l'axe vertical (z) étant orienté parallèlement à une normale à la surface d'un côté supérieur ou inférieur d'un module solaire (7) lorsque celui-ci est reçu dans la partie de réception (2a) du dispositif de serrage.

2. Dispositif de serrage selon la revendication 1, **caractérisé en ce qu'**au moins l'autre partie de paroi latérale (4) est flexible autour d'un axe de flexion (21), l'axe de flexion (21) étant orienté parallèlement à un axe longitudinal du dispositif de serrage (1).

3. Dispositif de serrage selon l'une des revendications précédentes, **caractérisé en ce que** dans un état non déformé de l'autre partie de paroi latérale (4), l'autre partie de paroi latérale (4) est inclinée suivant un angle supérieur à 0° et inférieur à 90° par rapport à la première partie de paroi latérale (3).

4. Dispositif de serrage selon l'une des revendications précédentes, **caractérisé en ce que** dans un état non déformé de l'autre partie de paroi latérale (4), une distance maximale (Dmax) entre la première et l'autre partie de paroi latérale (3, 4) est supérieure à une épaisseur (D7) d'un module solaire (7) à serrer.

5. Dispositif de serrage selon l'une des revendications précédentes, **caractérisé en ce qu'**au moins la première partie de réception (2a) est formée à partir de métal.

6. Dispositif de serrage selon l'une des revendications précédentes, **caractérisé en ce qu'**une partie de réception d'élément d'étanchéité est disposée sur l'autre partie de paroi latérale (4).

7. Dispositif de serrage selon l'une des revendications précédentes, **caractérisé en ce que** le dispositif de serrage (1) comporte au moins un élément d'étanchéité (8), au moins une partie de l'élément d'étanchéité (8) étant disposée sur la première et/ou l'autre partie de paroi latérale (3, 4).

8. Dispositif de serrage selon la revendication 7, **caractérisé en ce qu'**au moins une partie de l'élément d'étanchéité (8) est disposée sur une partie de paroi de fond (5) de la première partie de réception (2a), la surface, tournée vers la partie de paroi de fond (5), de la partie de l'élément d'étanchéité (8) et/ou la surface, opposée à la partie de paroi de fond (5), de la partie de l'élément d'étanchéité (8) étant formées de manière inégale.

9. Dispositif de serrage selon la revendication 7 ou 8, **caractérisé en ce qu'**au moins une partie de l'élément d'étanchéité (8) est disposée sur une partie de paroi latérale (3, 4) de la première partie de réception (2a), la surface, tournée vers la partie de paroi latérale (3, 4), de la partie de l'élément d'étanchéité (8) et/ou la surface, opposée à la partie de paroi latérale (3, 4), de la partie de l'élément d'étanchéité (8) étant formées de manière inégale.

10. Dispositif de serrage selon l'une des revendications précédentes, **caractérisé en ce qu'**une surface, tournée vers la région de réception (6a), de la première et/ou l'autre partie de paroi latérale (3, 4) est formée de manière inégale.

11. Dispositif de serrage selon l'une des revendications précédentes, **caractérisé en ce qu'**une transition de la région de réception (6a) ou de l'élément d'étanchéité (8) à la première partie de réception (2a) présente une conductivité électrique prédéfinie.

12. Procédé de montage d'un module solaire, dans lequel un dispositif de serrage (1) selon l'une des revendications 1 à 11 est disposé sur ou contre une structure de support (14), dans lequel une partie de bord du module solaire (7) est disposée dans une région de réception (6a) du dispositif de serrage (1), dans lequel le dispositif de serrage (1) est fixé à la structure de support (14).

13. Procédé selon la revendication 12, **caractérisé en ce que** lors de la fixation du dispositif de serrage (1) à la structure de support (14), la partie de bord est serrée entre la première et l'autre partie de paroi latérale (3, 4).

14. Procédé selon la revendication 12 ou 13, **caractérisé en ce que** le dispositif de serrage (1) est fixé à la structure de support (14) par le fait qu'une partie de fixation (11) du dispositif de serrage (1) est fixée à la structure de support (14) de telle sorte qu'une partie de contact de la partie de fixation (11) s'appuie contre la structure de support (14).

15. Procédé selon la revendication 14, **caractérisé en ce que** seulement une partie de la partie de contact ou toute la partie de contact de la partie de fixation (11) et/ou seulement une partie d'une partie de contact d'un élément d'espacement (9) ou toute la partie de contact de l'élément d'espacement (9) s'appuient contre la structure de support (14).
